# EUROPEAN PATENT APPLICATION

(11) **EP 2 818 664 A1**
(43) Date of publication of application: **31.12.2014**
(21) Application number: 13752039.1
(22) Date of filing: 20.02.2013
(51) Int. Cl.: F02B 39/00, F01D 11/02, F01D 25/24

(54) **TURBO CHARGER**

(30) Priority: 23.02.2012 JP 2012037504
(71) Applicant: Mitsubishi Heavy Industries, Ltd., Tokyo 108-8215 (JP)
(72) Inventor: YAMAGUCHI, Hideki, Tokyo 108-8215 (JP); ARAI, Takashi, Tokyo 108-8215 (JP); YOKOYAMA, Takao, Tokyo 108-8215 (JP)
(74) Representative: Hess, Peter K. G.
(86) International application number: PCT/JP2013/054186
(87) International publication number: WO 2013/125580

(57) **Abstract**

To reduce the amount of exhaust gas leaking through the inlet side of the turbine wheel and the back face to the brazed portion and to suppress decrease in strength of the brazed portion due to increase in the temperature of the brazed portion in operation, a turbocharger having a turbine rotor including a turbine wheel and a shaft which are joined to each other with a brazing material comprises: a turbine housing 3; a bearing housing 10; and a back plate 11 disposed on a back face side of the turbine wheel 5 and along the back face with a space; the back plate 11 comprising: a fixing portion 11a formed in an outer peripheral portion of the back plate 11, the back plate 11a fixed in a joint portion of the turbine housing 3 and the bearing housing 10; and an opening portion 35 formed in an inner peripheral portion of the back plate 11, into which an cylindrical flange portion 10b is inserted with a space; wherein a narrowed portion 36 is formed between the back face of the turbine wheel 5 and a lateral face of the back plate 11, for suppressing an flow rate of an exhaust gas leaking through an inlet and then the back face side of the turbine wheel 5 and flowing to a joint portion B comprising the brazing material.

## Description

### TECHNICAL FIELD

The present invention relates to a turbocharger used for an internal combustion engine such as an engine, particularly to turbocharger comprising a turbine rotor including a turbine wheel and a shaft which are joined to each other with a brazing material.

### BACKGROUND

Turbochargers have been downsized for the purpose of improving fuel consumption, and the temperature of the exhaust gas tends to be high for improvement of performance.

In response to such a demand for improving performance, a turbine rotor comprising a turbine wheel composed of TiAl, which is excellent in heat resistance, and a shaft composed of steel which are joined to each other with a brazing material such as a Ni-based brazing material, is proposed by, for example, Patent Document 1 (JP 2000-202683 A) or Patent Document 2 (JP H10-193087 A).

Patent Document 1 discloses a structure having a turbine wheel composed of TiAl intermetallic compound based alloy and a shaft composed of carbon steel, which are joined to each other via an intermediate material, where the turbine wheel and the intermediate material are joined so that a convex joint part of the turbine wheel and a concave joint part of the intermediate material are fitted into each other.

Patent Document 2 discloses a structure having a turbine wheel composed of TiAl and a rotor shaft composed of structural or martensitic heat-resistant steel, obtained by inserting a brazing material (such as a silver-based brazing material containing silver as the major component, a nickel-based brazing material containing nickel as the major component or a copper-based brazing material containing copper as the major component) between a convex portion of the turbine wheel of TiAl and a concave portion of the shaft, and fitting the concave portion and the convex portion into each other to join the turbine wheel and the shaft to each other.

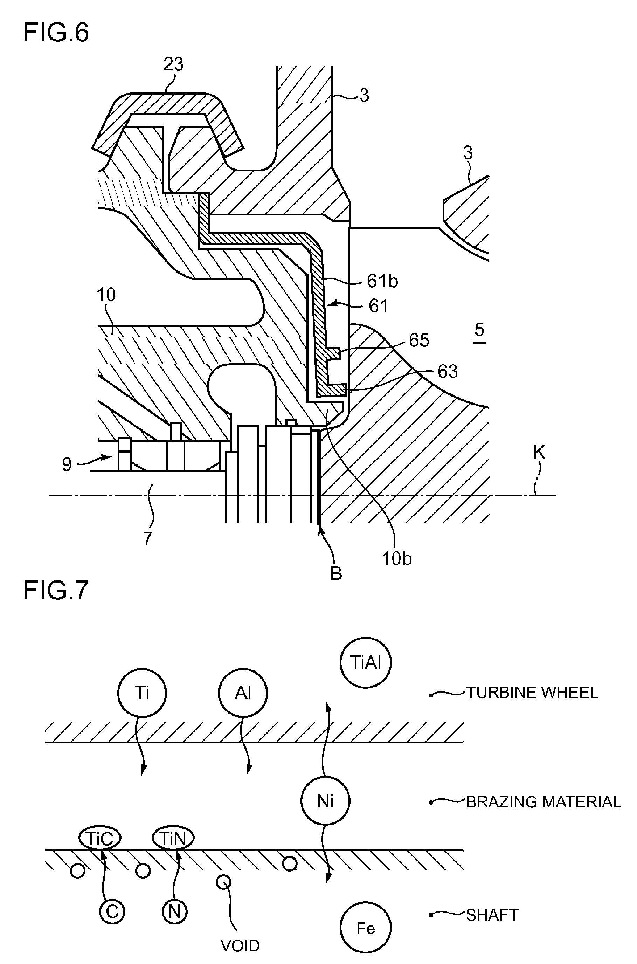

As the temperature of the exhaust gas increases as described above, the temperature of the exhaust gas of e.g. a gasoline engine of a car can reach 950°C to 980°C in some cases. If a turbine rotor TiAl is exposed to an exhaust gas having such a high temperature, diffusion may progress between the turbine wheel of TiAl and the Ni-based brazing material, and between the Ni-based material and the shaft of carbon steel, as illustrated in Fig. 7.

That is, the Ti component and the Al component of the turbine wheel move to the brazing material side, and the Ni component of the Ni-based brazing material moves to the turbine wheel side or the shaft side. Further the C component and the N component on the shaft side move to the brazing material side. Because of such movement of the C component and the N component on the shaft side, Ti from the turbine wheel binds to a boundary portion between the Ni-based brazing material and the shaft of carbon steel to generate carbides and nitrides such as TiC (titanium carbide) and TiN (titanium nitride). On the shaft side, voids arise at the sites where the C components and N components which have moved, have been present.

Due to such carbides, nitrides and voids generated or arising in the boundary area between the Ni-based brazing material and the shaft of carbon steel, brazing strength may be substantially decreased, which may lead to breakage. Thus, measures to prevent decrease in the brazing strength in a case of exposure to exhaust gas having a high temperature, is desired.

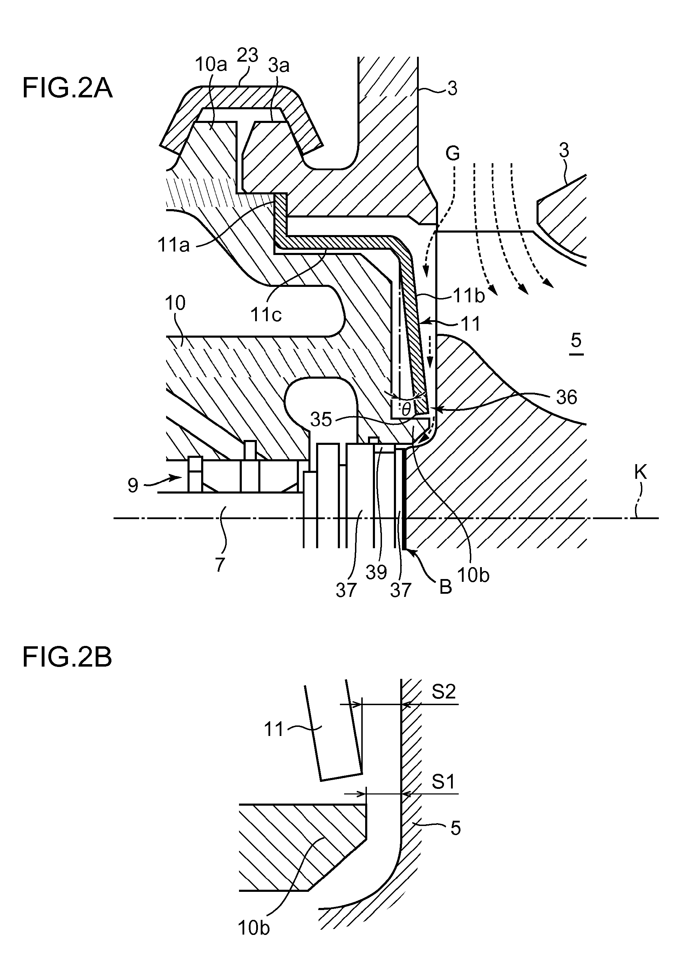

On the other hand, in regard to flow of the exhaust gas within the turbocharger, as illustrated in Figs. 2A and 2B (views for explanation of the first embodiment), a large part of the exhaust gas G flown from the engine into the turbine housing 3 will be flown to the turbine wheel 5. However, a part of the exhaust gas G may leak to the back face side and flow to the joint of the turbine wheel 5 and the shaft 7, further to the bearing 9 of the shaft 7.

As measures for such leakage flow, a back plate is provided on the back face side of the turbine wheel. For example, Patent Document 3 (JP 2001-173450 A) discloses, as seen in Fig. 8, a back plate 05 provided on the back face side of a turbine wheel 03 enclosed in a turbine housing 01.

### Citation List

### Patent Literature

Patent Document 1: JP 2000-202683 A
Patent Document 2: JP H10-193087 A
Patent Document 3: JP 2001-173450 A

### SUMMARY

### Technical Problem

The temperature of the brazed portion in an turbine rotor in operation is increased by thermal conduction from the turbine wheel having high temperature due to exposure to high-temperature exhaust gas. Further, exhaust gas having leaked to the turbine wheel as described above has a temperature of 950°C or higher. Accordingly, if the leaking exhaust gas reaches the brazed portion, the temperature of the brazed portion may be increased to a temperature higher than a temperature by the thermal conduction from the turbine wheel.

Thus, there may be such a problem that decrease in the brazing strength against exhaust gas having increased temperature may not be effectively prevented if the leaking exhaust gas reaches the brazed portion, even when the brazed portion is disposed apart from the turbine wheel as measures against the thermal conduction from the turbine wheel.

Patent Document 3 discloses a structure where a back plate is provided on the back face side of the turbine wheel. However, the back plate has a portion having a gradient toward the side opposite to the turbine wheel from the outer peripheral to the center in the radial direction. Thus, although heat shielding effect against heat from the turbine wheel may be obtained, it is difficult to obtain an effect to suppress the flow of leaking gas along the shaft direction.

In view of the above problem, the present invention is to provide a turbocharger comprising a turbine rotor including a turbine wheel and a shaft which are joined to each other with a brazing material which enables to reduce the amount of exhaust gas leaking through the inlet side of the turbine wheel and the back face to the brazed portion and to suppress decrease in strength of the brazed portion due to increase in the temperature of the brazed portion in operation.

### Solution to Problem

In order to solve the above problem, the present invention provides a turbocharger comprising:
a turbine rotor including a turbine wheel and a shaft which are joined to each other with a brazing material;
a turbine housing for accommodating the turbine wheel;
a bearing housing having a bearing for rotatably supporting the shaft; and
a back plate disposed on a back face side of the turbine wheel and along the back face with a space;
said back plate comprising:
   a fixing portion of the back plate formed in an outer peripheral portion of the back plate, said back plate fixed in a joint portion of the turbine housing and the bearing housing; and
   an opening portion formed in an inner peripheral portion of the back plate, into which an cylindrical flange portion of the bearing housing for supporting the shaft is inserted with a space;
   wherein a suppressing portion is formed between the back face of the turbine wheel and a lateral face of the back plate, for suppressing an flow rate of an exhaust gas leaking through an inlet of the turbine wheel and then the back face side of the turbine wheel and flowing along a direction of the shaft.

The turbocharger according to the above invention has a suppressing portion formed between a lateral face of the back plate disposed on a back face side of the turbine wheel and along the back face with a space and the back face of the turbine wheel, for suppressing an flow rate of an exhaust gas leaking through an inlet of the turbine wheel and then the back face side of the turbine wheel and flowing along a direction of the shaft, whereby it is possible to reduce the flow rate of exhaust gas which reaches the brazing material. Accordingly it is possible to suppress increase in the temperature of the brazed portion due to exhaust gas flow having a high temperature of 950°C or higher, thereby to prevent decrease in the strength of the brazed portion.

In the present invention, it is preferred that the back plate comprises a gradient portion having a gradient from the radial direction toward the turbine wheel side as a position in the back plate is closer to a rotation center of the turbine wheel, said gradient portion having a tip portion on the rotation center side, and the suppressing portion comprises the tip portion of the gradient portion.

The back plate is formed so that it comprises a gradient portion having a gradient from the radial direction toward the turbine wheel side as a position in the back plate is closer to a rotation center of the turbine wheel, said gradient portion having a tip portion on the rotation center side, and the suppressing portion comprises the tip portion of the gradient portion, as above, whereby the structure of the suppressing portion can be simplified, and the manufacture may become easier.

In the present invention, it is preferred that the suppressing portion comprises a labyrinth structure on a lateral side of the inner peripheral portion of the back plate, and the labyrinth structure comprises a convex portion projecting toward the back face side of the turbine wheel.

By providing the labyrinth structure in the inner peripheral portion of the back plate, the exhaust gas becomes less likely to flow, whereby it is possible to suppress the flow rate of the exhaust gas to the brazed portion.

The suppression of the flow rate of the exhaust gas by the gradient portion of the back plate is attributed to reduced cross-sectional area of the flow path, i.e. narrowing effect. On the other hand, the suppression of the flow rate of the exhaust gas by the labyrinth structure of the back plate is attributed to reduction in the flowability (surface roughness, shape of the flow path, or the like).

It can be considered that the flow rate of the exhaust gas can be decreased by reducing the cross-sectional area of the flow path or reducing the flowability (surface roughness, shape of the flow path, or the like). Based on such a consideration, the suppressing portion having the gradient portion with the narrowing effect or having the labyrinth structure with reduced flowability has been accomplished.

In the present invention, it is preferred that the labyrinth structure comprises the convex portion formed on the back plate and a convex portion formed on the back face of the turbine wheel in combination.

Accordingly the labyrinth structure comprises a combination including the convex portion formed on the back face of the turbine wheel, whereby the reduction in the flowability due to the labyrinth can be effectively obtained in a small space, and it is thereby possible to effectively suppress the flow rate of the exhaust gas to the brazed portion.

In the present invention, it is preferred that the convex portion formed on the back plate comprises a plurality of convex lines having a common center being the rotation center of the turbine wheel, and the convex line on the rotational center side is higher than the other convex line.

Accordingly, the convex portion formed on the back plate comprises a radially plurality of convex lines, and the convex line on the rotational center side is higher than the other convex line, whereby the effect of the reduction in the flowablility can be maintained even in operation.

That is, during operation, as the leaking gas from the inlet of the turbine wheel is flown through the space between the back plate and the back face of the turbine wheel, a pressure of the exhaust gas acts on the inner peripheral portion of the back plate so as to push the back plate. However, since the convex line on the rotational center side is higher than the other convex line, even if the back plate is pushed to be deformed, the effect of the reduced flowability by the convex portion can be obtained without being weakened.

### Advantageous Effects

According to the present invention, a turbocharger comprises a suppressing portion formed between the back face of the turbine wheel and a lateral face of the back plate, for suppressing an flow rate of an exhaust gas leaking through an inlet of the turbine wheel and then the back face side of the turbine wheel and flowing along a direction of the shaft, whereby it is possible to reduce the amount of exhaust gas leaking through the inlet side of the turbine wheel and the back face to the brazed portion and to suppress decrease in strength of the brazed portion due to increase in the temperature of the brazed portion in operation.

### BRIEF DESCRIPTION OF DRAWINGS

FIG. 1 is a schematic diagram of a turbocharger according to the present invention.
FIGs. 2A and 2B are enlarged views of a turbocharger according to a first embodiment: FIG. 2A is an enlarged cross-sectional view of the portion A in Fig. 1, and FIG. 2B is an enlarged view of a narrowed portion.
FIG.3 is a view of a turbocharger according to a second embodiment, corresponding to Figs. 2A and 2B.
FIG. 4 is a diagram for explanation of the second embodiment.
FIG. 5 is a view of a turbocharger according to a third embodiment, corresponding to Figs. 2A and 2B.
FIG. 6 is a view of a turbocharger according to a fourth embodiment, corresponding to Figs. 2A and 2B.
FIG. 7 is a drawing illustrating diffusion phenomenon among a turbine wheel of TiAl, a Ni-based brazing material and a shaft of carbon steel.

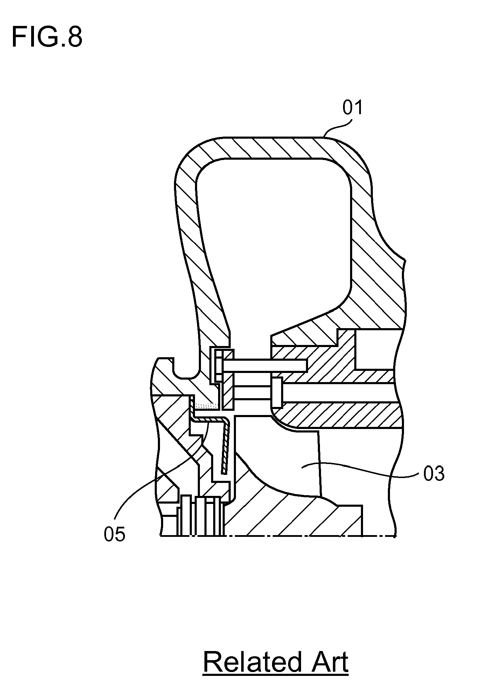

FIG. 8 is a diagram for explanation of prior art.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

### (First embodiment)

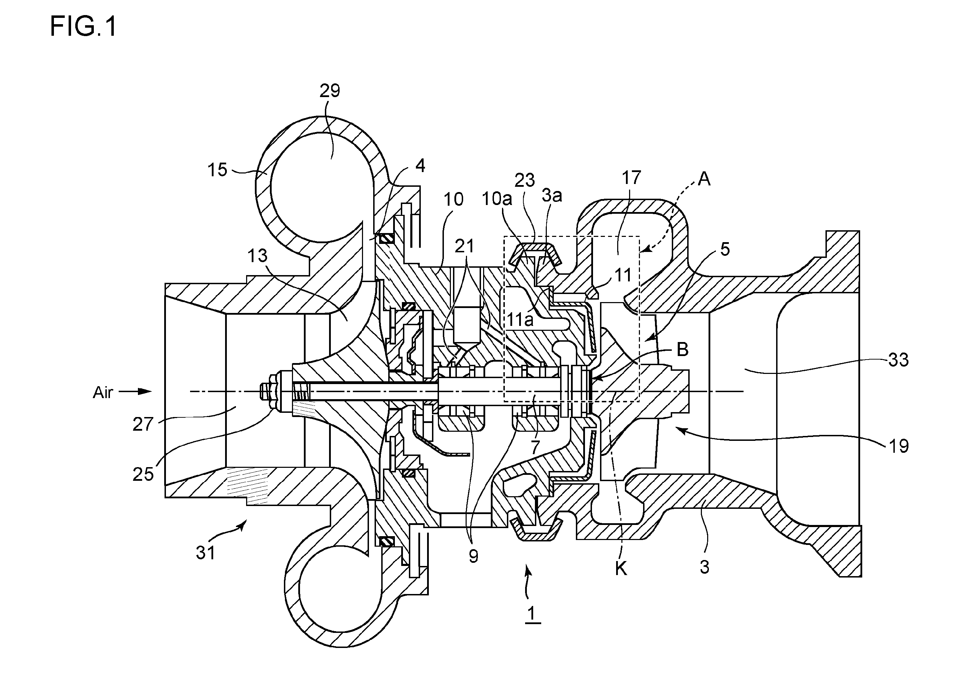

Fig. 1 is a cross-sectional view of a turbocharger 1 according to the first embodiment of the present invention, along the rotational axis line K.

Firstly, the structure of the turbocharger 1 will be briefly described. In the following description, the turbocharger 1 is a turbocharger for an engine for a car, for an example.

The turbocharger 1 comprises a turbine housing 3 for accommodating a turbine wheel 5, a bearing housing 10 having a bearing 9 for rotatably supporting a turbine shaft (hereinafter simply referred to as "shaft") 7, and a compressor housing 15 for accommodating an impeller 13 of a compressor, which are disposed next to one another along the direction of the rotational axis line K.

In the outer portion of the turbine housing 3, a scroll 17 having a spiral shape is formed. The turbine wheel 5 is disposed in the center portion of the spiral shape, and the turbine wheel 5 and an end portion of the shaft 7 are joined to each other with a brazing material at the joint portion B to integrally form a turbine rotor 19.

The bearing housing 10 has a pair of bearings 9, 9 for supporting the shaft 7 rotatably around the rotational axis line K. The bearings 9, 9 are configured to receive lubricant oil supplied via a lubricant oil passage 21.

The bearing housing 10 and the turbine housing 3 have projecting flanges 10a, 3a formed their end portions, respectively, which face to each other and are fitted into a snap ring 23 having a U-shaped cross-section provided around the projecting flanges to join the bearing housing and the turbine housing together. In the joint portion, an outer flange portion 11a, which is the fixing portion of the back plate 11 to be described later, is held in between.

The impeller 13 of the compressor is fixed on the other end portion of the shaft 7 by a mounting nut 25. In the compressor housing 15, an air inlet passage 27, a air passage 29 and a diffuser are provided to constitute the centrifugal compressor 31.

During operation of the turbocharger 1 having such a structure, exhaust gas from an engine (not shown) is flown into the scroll 17, and then it is flown from the scroll 17 into turbine blades of the turbine wheel 5 from the outer side thereof, then toward the center along the radial direction to do a work on the turbine wheel 5. Then the exhaust gas is flown along the axial direction and to outside the machine, guided by the gas outlet 33.

On the other hand, rotation of the turbine wheel 5 rotates the impeller 13 of the centrifugal compressor 31 through the shaft 7, and air supplied through the air inlet passage 27 of the compressor housing 15 is pressurized by the impeller 13, and then is supplied to the engine (not shown) through the air passage 29.

Then the back plate 11 will be described. FIG. 2A is an enlarged cross-sectional view of the portion A in Fig. 1, and FIG. 2B is an enlarged view of a narrowed portion. As illustrated in Figs. 2A and 2B, the back plate 11 has a cylinder-like shape having a bottom and comprises a bottom portion 11b, a cylinder potion 11c having a cylinder-like shape extending from the outer edge portion of the bottom portion 11b toward a direction along the rotational axis line K, and an outer flange portion (a fixing portion of the back plate) 11 a which is a bent end portion of the cylinder portion 11c extending along a direction perpendicular to the rotational axis line K. The outer flange portion 11a is held between the bearing housing 10 and the turbine housing 3, as described above, to be positioned there and fixed.

An opening portion 35 is formed in the central portion in the radial direction of the bottom portion 11b, and a cylindrical flange portion 10b formed in and end portion of the bearing housing 10 for supporting the shaft 7 is inserted therein with a gap. Accordingly, the inner peripheral portion of the back plate 11 is in a free state (un-held state) without being supported, and the back plate 11 is positioned and fixed only by the outer flange portion 11 a in the outer peripheral portion.

In this embodiment, the shape of the cross section of the bottom portion 11b of the back plate 11 along the rotational axis line K has a gradient so as to be gradually closer to the back face of the turbine wheel 5 from the outer side in the radial direction to the center, and the tip portion and the back face of the turbine wheel 5 together form a narrowed portion (suppressing portion) 36 where they are closest. The gradient angle θ is set not to get in contact with the back face of the turbine wheel 5 even in a case of deformation by push by the heat of the exhaust gas.

Since the back plate 11 is to be exposed to exhaust gas having leaked from the inlet of the turbine wheel 5 and flown to the back face side of the turbine wheel 5 and may have a high temperature of about 1,000°C when the exhaust gas has a temperature of 950°C or higher, the back plate 11 comprises a heat-resistant steel plate such as SUS301 (stainless steel).

Turbine wheel 5 comprises TiAl, which is excellent in heat resistance property, and the shaft comprises carbon steel such as SC steel or SCM steel. The turbine wheel 5 and the shaft 7 are joined to each other with a brazing material such as Ni-based brazing material.

As shown Fig. 2A, the turbine wheel 5 and the shaft 7 are joined at the joint portion B, and seal ring 39 comprising metal is provided between seal flanges 37 of the shaft 7 so that the exhaust gas will not flow toward the bearing 9.

According to the first embodiment having the construction as above, a large part of the exhaust gas G having been flown from the engine to the scroll 17 in the turbine housing 3 is flown into the turbine wheel 5 from the inlet along the radial direction, but a part of the exhaust gas may leak toward the back face side of the turbine wheel 5 and flow between the back face of the turbine wheel 5 and the back plate 11 toward the middle portion, to the joint portion B of the shaft 7 and further to the bearing 9 of the shaft 7.

When the exhaust gas flows to the joint portion B of the shaft 7, due to the narrowing effect arising from the space S1 (see Fig. 2A) formed between the tip of the cylindrical flange portion 10b at the end portion of the bearing housing 10 and the back face of the turbine wheel 5, the flow of the exhaust gas to the joint portion B of the shaft 7. In this embodiment, a narrowed portion 36 is formed by the tip portion of the back plate 11 having a gradient so as to be closer to the back face of the turbine wheel 5 and the turbine wheel 5, where the two are the closest. Accordingly, further narrowing effect by the space S2 (see Fig. 2B) of the narrowed portion 36 can be obtained.

The narrowing effect by the narrowed portion 36 can be obtained when the bottom portion 11 b of the back plate 11 has a gradient relative to the radial direction, i.e. θ > 0, and by setting the space S2 to be equivalent to or smaller than the space S1, a more effective narrowing effect may be obtained.

As a result of the effect of suppressing the flow rate of the exhaust gas by the narrowed portion 36, it is possible to reduce the flow rate of the leaking exhaust gas which reaches the brazing material of the joint portion B, thereby to suppress increase in the temperature of the brazed portion by exhaust gas flow having a high temperature of 950°C or higher to prevent decrease in the strength of the brazed portion.

### (Second embodiment)

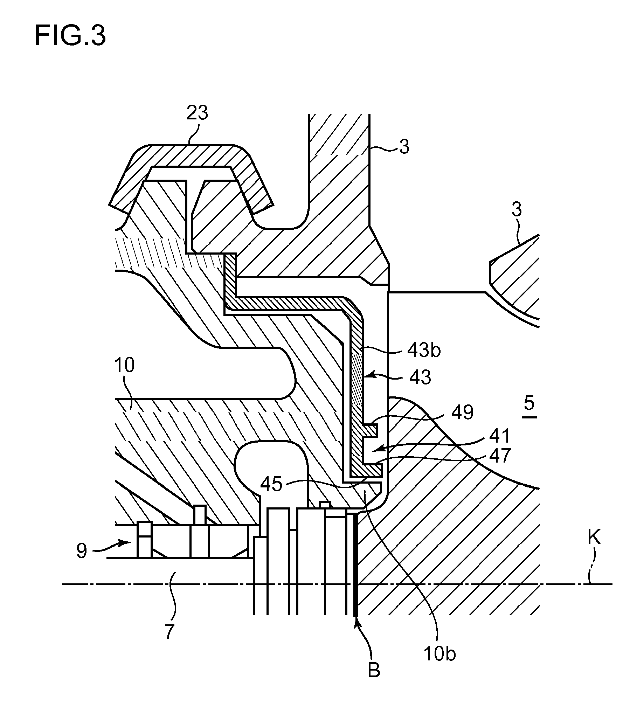

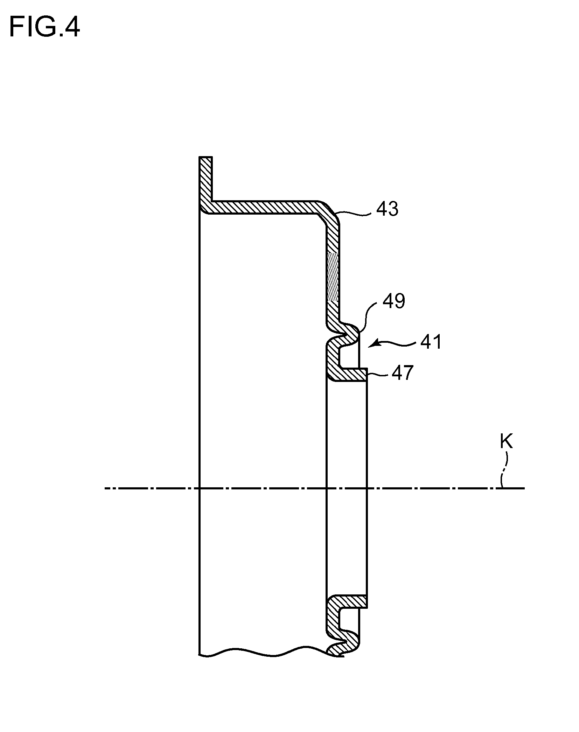

Then, a second embodiment of the present invention will be described with reference to Fig. 3 and Fig. 4. The second embodiment employs a labyrinth structure 41 for the narrowed portion (suppressing portion) 36 in the first embodiment. The same elements as those of the first embodiment are assigned with the same reference numerals as those of the first embodiment, and the same description thereof will be omitted.

As illustrated in Fig. 3, the bottom portion 43b of the back plate 43 extends along the radial direction, and in the inner peripheral portion, i.e. the area around the opening portion 45 of the back plate 43, a convex portion 37 projecting toward the back face side of the turbine wheel 5 is formed, and a convex portion 49 is formed on the outer side. The convex portions 47, 49 have a common center, which is the rotational center of the turbine wheel 5. The convex portion 47, which is closer to the edge of the opening portion 45, is formed so as to be higher than the outer convex portion 47. These convex portions 47, 49 together form a labyrinth structure 41. Of course the convex portions 47, 49 may have the same height.

By employing the above structure, it is possible to reduce the flowability of the exhaust gas, thereby to suppress the flow rate of the exhaust gas to the brazed portion.

In the first embodiment, the suppression of the flow rate of the exhaust gas by the gradient of the back plate is attributed to reduced cross-sectional area of the flow path, i.e. narrowing effect. In this second embodiment, the suppression of the flow rate of the exhaust gas by the labyrinth structure 41 of the back plate 43 is attributed to reduction in the flowability (surface roughness, shape of the flow path, or the like).

Generally, the gas flow rate Q is represented by the following formula: Q=A×Φ×f(ΔP), where A is cross-sectional area of the flow path, Φ is the flowability (surface roughness, shape of the flow path, or the like), and f(ΔP) is pressure difference. As f(ΔP) depends on the difference between the pressure of the exhaust gas on the inlet side where the exhaust gas is flown into the turbine wheel 5, and the pressure at the brazed portion, it is difficult to diminish f(ΔP).

Accordingly, the cross-sectional area A of the flow path maybe decreased, i.e. the flow path cross-section is narrowed, and the flowability (surface roughness, shape of the flow path, or the like) Φ may be decreased, to decrease the gas flow rate Q. The narrowing effect by the gradient of the back plate 11 in the first embodiment is based on the idea, and the second embodiment is based on the reduction of flowability by the labyrinth structure. This is an idea based on the flowability (surface roughness, shape of the flow path, or the like), but narrowing effect by the space between the convex portions 47, 49 and the back face of the turbine wheel 5 is also taken into consideration, and so it can be considered that both the cross-sectional area A of the flow path and the flowability Φ have an impact.

Further, for manufacturing of the convex portions 47, 49 which constitute the labyrinth structure 41, as illustrated in Fig. 4, when a plate material is subjected to press forming to form the back plate 43 having a cylinder-like shape having a bottom, the convex portions 47, 49 can be formed at the same time, whereby it is possible to form the labyrinth structure easily.

According to the second embodiment as described above, as a result of the effect of suppressing the flow rate of the exhaust gas by the labyrinth structure 41, the flow rate of the leaking exhaust gas which reaches the brazing material at the joint portion B. Therefore it is possible to suppress increase in the temperature of the brazed portion by the exhaust gas flow having a high temperature of 950°C or higher, thereby to prevent decrease in the strength of the brazed portion.

Further, as the convex portion 47 on the inner side has a larger projecting amount than the convex portion 49 on the outer side, the effect of the reduction of flowability can be maintained even during operation. That is, during operation, the leaking exhaust gas from the inlet side of the turbine wheel 5, flowing through the space between the back plate 43 and the turbine wheel 5, functions to press and deform the back plate 43; however, as the convex portion 47 on the inner side has an amount of projection larger than the convex portion 49 on the outer side, the effect by the reduction of the flowability by the convex portion 49 can be maintained without being decreased even when the back plate 43 is pressed and deformed.

### (Third embodiment)

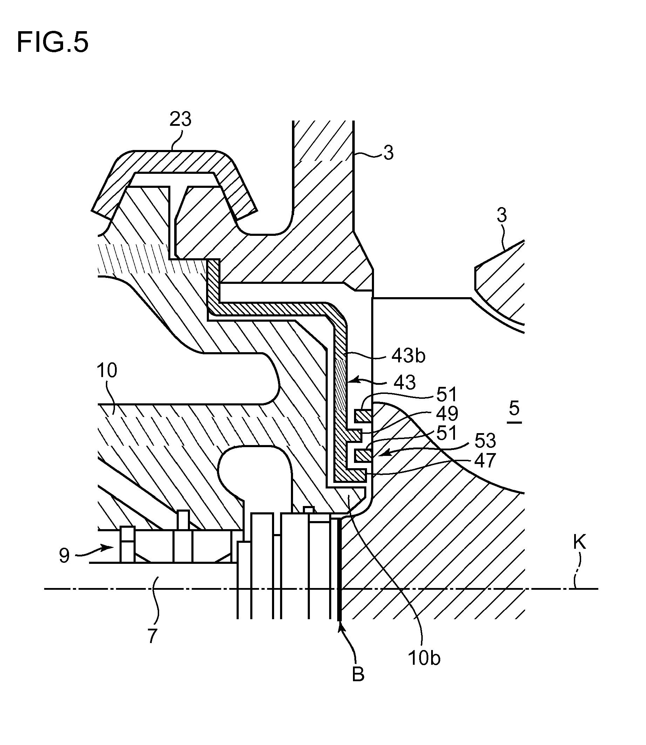

Then, a third embodiment of the present invention will be described with reference to Fig. 5. In the third embodiment, an improved effect by the labyrinth according to the second embodiment can be obtained. The same elements as those of the second embodiment are assigned with the same reference numerals as those of the second embodiment, and the same description thereof will be omitted.

As illustrated in Fig. 5, the turbine wheel 5 has convex portions 51, 51 on the back face so that a convex portion 49 formed on the back plate 43 is disposed between the convex portions 51, 51, to form a labyrinth structure 53 comprising the combination of the convex portions 47, 49 of the back plate 43 and the convex portions 51, 51 of the turbine wheel 5. The convex portions 51, 51 provided on the back face of the turbine wheel 5 have the same height.

By the labyrinth structure 53 comprising the combination with the convex portions 51 formed on the back face of the turbine wheel 5, it is possible to effectively obtain the reduction of the flowability by the labyrinth in a small space, thereby to effectively suppress the flow rate of the exhaust gas to the brazed portion.

### (Fourth embodiment)

Then, a fourth embodiment of the present invention will be described with reference to Fig. 6. In the fourth embodiment, an improved effect by the labyrinth according to the second embodiment can be obtained. The same elements as those of the second embodiment are assigned with the same reference numerals as those of the second embodiment, and the same description thereof will be omitted.

As illustrated in Fig. 6, this embodiment is a combination of the back plate having a gradient according to the first embodiment and the labyrinth structure according to the second embodiment.

The bottom portion 61b of the back plate 61 has a gradient so as to be gradually closer to the back face of the turbine wheel 5 from the outer side in the radial direction to the center, and the bottom portion 61b has a convex portion 63 on the tip portion and a convex portion 65 on the side outer than the convex portion 63. The convex portions 63, 65 are formed as projections extending along a direction perpendicular to the bottom portion 61b of the back plate 61, and the convex portion 63 on the inner side is higher than the convex portion 65 on the outer side.

Accordingly, by employing the labyrinth structure 67 comprising the bottom portion 61 having a gradient and the convex portions 63, 65, it is possible to effectively suppress the flow rate of the exhaust gas in a small space, thereby to effectively suppress the flow rate of the exhaust gas to the brazed portion.

Further to this embodiment, a labyrinth structure may comprise the convex portions in combination with the convex portions on the turbine wheel 5 side as in the third embodiment. In this case, it is possible to obtain an further effect of suppressing the flow of the leaking exhaust gas in a small space.

### Industrial Applicability

The turbocharger according to the present invention comprises a suppressing portion formed between the back face of the turbine wheel and a lateral face of the back plate, for suppressing an flow rate of an exhaust gas leaking through an inlet of the turbine wheel and then the back face side of the turbine wheel and flowing along a direction of the shaft, whereby it is possible to reduce the amount of exhaust gas leaking through the inlet side of the turbine wheel and the back face to the brazed portion and to suppress decrease in strength of the brazed portion due to increase in the temperature of the brazed portion in operation. Accordingly the present invention is applicable to a turbocharger comprising a turbine rotor including a turbine wheel and a shaft which are joined to each other with a brazing material.

## Claims

1. A turbocharger comprising:
a turbine rotor including a turbine wheel and a shaft which are joined to each other with a brazing material;
a turbine housing for accommodating the turbine wheel;
a bearing housing having a bearing for rotatably supporting the shaft; and
a back plate disposed on a back face side of the turbine wheel and along the back face with a space;
said back plate comprising:
a fixing portion of the back plate formed in an outer peripheral portion of the back plate, said back plate fixed in a joint portion of the turbine housing and the bearing housing; and
an opening portion formed in an inner peripheral portion of the back plate, into which an cylindrical flange portion of the bearing housing for supporting the shaft is inserted with a space;
wherein a suppressing portion is formed between the back face of the turbine wheel and a lateral face of the back plate, for suppressing an flow rate of an exhaust gas leaking through an inlet of the turbine wheel and then the back face side of the turbine wheel and flowing along a direction of the shaft.

2. The turbocharger according to claim 1, wherein the back plate comprises a gradient portion having a gradient from the radial direction toward the turbine wheel side as a position in the back plate is closer to a rotation center of the turbine wheel, said gradient portion having a tip portion on the rotation center side, and the suppressing portion comprises the tip portion of the gradient portion.

3. The turbocharger according to claim 1 or 2, wherein the suppressing portion comprises a labyrinth structure on a lateral side of the inner peripheral portion of the back plate, said labyrinth structure comprising a convex portion projecting toward the back face side of the turbine wheel.

4. The turbocharger according to claim 3, wherein the labyrinth structure comprises the convex portion formed on the back plate and a convex portion formed on the back face of the turbine wheel in combination.

5. The turbocharger according to claim 3, wherein the convex portion formed on the back plate comprises a plurality of convex lines having a common center being the rotation center of the turbine wheel, and the convex line on the rotational center side is higher than the other convex line.

## Amended claims

### Amended claims under Art. 19.1 PCT

**1.** A turbocharger comprising:
a turbine rotor including a turbine wheel and a shaft which are joined to each other with a brazing material;
a turbine housing for accommodating the turbine wheel;
a bearing housing having a bearing for rotatably supporting the shaft; and
a back plate disposed on a back face side of the turbine wheel and along the back face with a space;
said back plate comprising:
a fixing portion of the back plate formed in an outer peripheral portion of the back plate, said back plate fixed in a joint portion of the turbine housing and the bearing housing; and
an opening portion formed in an inner peripheral portion of the back plate, into which an cylindrical flange portion of the bearing housing for supporting the shaft is inserted with a space;
wherein a suppressing portion is formed between the back face of the turbine wheel and a lateral face of the back plate, for suppressing an flow rate of an exhaust gas leaking through an inlet of the turbine wheel and then the back face side of the turbine wheel and flowing along a direction of the shaft,
wherein the back plate comprises a gradient portion having a gradient from the radial direction toward the turbine wheel side as a position in the back plate is closer to a rotation center of the turbine wheel, said gradient portion having a tip portion on the rotation center side, and the suppressing portion comprises the tip portion of the gradient portion.

**3.** The turbocharger according to claim 1, wherein the suppressing portion comprises a labyrinth structure on a lateral side of the inner peripheral portion of the back plate, said labyrinth structure comprising a convex portion projecting toward the back face side of the turbine wheel.

**4.** The turbocharger according to claim 3, wherein the labyrinth structure comprises the convex portion formed on the back plate and a convex portion formed on the back face of the turbine wheel in combination.

**5.** The turbocharger according to claim 3, wherein the convex portion formed on the back plate comprises a plurality of convex lines having a common center being the rotation center of the turbine wheel, and the convex line on the rotational center side is higher than the other convex line.
